# EUROPEAN PATENT APPLICATION

(11) **EP 2 408 255 A2**
(43) Date of publication of application: **18.01.2012**
(21) Application number: 11168845.3
(22) Date of filing: 06.06.2011
(51) Int. Cl.: H04W 76/06

(54) **System and method for triggering dormant state in a mobile station in a UMTS/LTE network**

(30) Priority: 13.07.2010 US 835498
(71) Applicant: Samsung Electronics Co., Ltd., Gyeonggi-do 442-742 (KR)
(72) Inventor: Herle, Sudhindra P, Gyeonggi-do 442-742 (KR); Sengottaiyan, Ravindranathan, Gyeonggi-do 442-742 (KR)
(74) Representative: Jenkins, Richard Gavin

(57) **Abstract**

A wireless communication network is provided. The network includes a plurality of mobile stations and at least one radio network controller (RNC) in communication with at least one of the mobile stations. The RNC is configured to receive a PDP context message from a first one of the mobile stations, the PDP context message having a traffic class associated with an idle connection. The RNC is also configured, in response to receiving the PDP context message, to send a connection release message to the first mobile station. The connection release message directs the first mobile station to move to a dormant state.

## Description

### TECHNICAL FIELD OF THE INVENTION

The present application relates generally to wireless communication and, more specifically, to a system and method for triggering a dormant state in a mobile station in a UMTS or LTE wireless network.

### BACKGROUND OF THE INVENTION

In conventional wireless communication, a mobile station connects with a base station and communicates voice and/or data information with the base station. During a data connection, a typical mobile station is in both receive and transmit mode for a successful data transfer. This dual mode status consumes the maximum power from the battery.

To minimize power usage, a mobile station will enter a dormant state when it is advantageous. A dormant state is characterized as a low power state in which the data connection is maintained while the physical connection between the mobile station and the base station is in discontinuous reception mode (DRX). Because radio resources are managed by the network, a dormant state can typically only be ordered by the network. Upon an order from the network, a mobile station will move to a dormant state. To determine when to order the dormant state, the Universal Mobile Telecommunications System (UMTS) core network often uses a pre-configured timer, irrespective of the characteristics of any active application. During Packet Data Protocol (PDP) Context activation, Quality of Service (QoS) may be negotiated, and a traffic flow template may be advised to the Gateway GPRS Support Node (GGSN).

Current popular mobile applications, such as Instant Messaging (IM), Email protocols, and Internet Protocol-based Multimedia system (IMS), use bursty traffic in which the traffic pattern cannot be fully determined by the network. For example, some idle states for these applications are determined at the mobile station. Due to characteristics of these mobile applications, the network cannot determine when the data connection is idle. Thus, the network uses a pre-configured timer to determine when to order the mobile station to a dormant state. This results in ineffective usage of radio resources and a compromised user experience.

### SUMMARY OF THE INVENTION

A mobile station for use in a wireless network is provided. The mobile station includes a memory and a controller operatively coupled to the memory. The controller is configured to send a PDP context message to a network controller, the PDP context message having a traffic class associated with an idle connection. The controller is also configured to receive a connection release message from the network controller. The controller is further configured, based on the connection release message, to move the mobile station to a dormant state.

A wireless communication network is provided. The network includes a plurality of mobile stations and at least one radio network controller (RNC) in communication with at least one of the mobile stations. The RNC is configured to receive a PDP context message from a first one of the mobile stations, the PDP context message having a traffic class associated with an idle connection. The RNC is also configured, in response to receiving the PDP context message, to send a connection release message to the first mobile station, the connection release message directing the first mobile station to move to a dormant state.

A method for use in a wireless communication network is provided. The method includes receiving a PDP context message from a mobile station, the PDP context message having a traffic class associated with an idle connection. The method also includes, in response to receiving the PDP context message, sending a connection release message to the mobile station, the connection release message directing the mobile station to move to a dormant state.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIGURE 1 illustrates an exemplary wireless network according to one embodiment of the present disclosure;
FIGURE 2 illustrates a wireless mobile station according to embodiments of the present disclosure;
FIGURE 3 illustrates a conventional PDP Context Activation process in a Universal Mobile Telecommunications System (UMTS) network;
FIGURE 4 illustrates a PDP Context Modification process in a UMTS or Long Term Evolution (LTE) network using an Idle Connection traffic class, according to embodiments of the present disclosure; and
FIGURE 5 illustrates a PDP Context Activation process in a UMTS or LTE network using an Idle Connection traffic class, according to embodiments of the present disclosure.

### DETAILED DESCRIPTION OF THE INVENTION

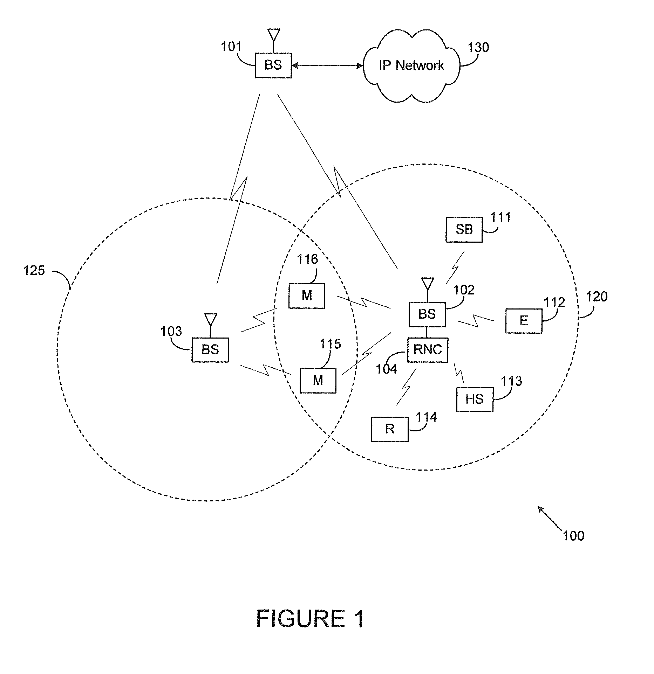

FIGURES 1 through 5, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless network.

The methods and apparatus described herein address the current problem of effective usage of radio resources in data applications on a wireless handset (also called a mobile station, user equipment, subscriber station, etc.). The embodiments described herein propose a modification in the Universal Mobile Telecommunications System (UMTS) and Long Term Evolution (LTE) standards.

Many current data applications such as Email, Instant Messaging (IM), and Internet Protocol-based Multimedia system (IMS), do not consider the cost of radio resources, as they were developed primarily for wired networks (e.g., Ethernet-based IP). To receive notifications, such as for new email, Presence, and incoming video calls (in IMS), the data connection must be kept alive but idle. To support these applications, a conventional wireless handset keeps the radio resources longer than needed.

In addition, current mobile applications, such as IM, Email protocols, and IMS, use bursty traffic in which the traffic pattern cannot be pre-determined by the network. Some examples of bursty traffic are:
1. When the mobile station enters "Hello" mode in IM or Presence mode in IMS;
2. When the mobile station enters "Direct Push" mode in ActiveSync® by Microsoft Corporation, after sending a Ping command;
3. When the mobile station enters "IDLE mode", after sending an IDLE command in IMAP;
4. When the mobile station acts as a server, such as in TCP Listening mode.

The protocols used by such mobile applications expect the TCP connection to be alive while keeping it idle or in TCP listening mode. During the idle period, the mobile station is in Radio Resource Connection (RRC) Connected state, consuming maximum battery power. The TCP connection must be kept alive and idle for information from the network (the "server") to reach the mobile station (the "client") when there is any activity. The expected data rate is less than 1-2 kbps to maintain such TCP connections.

Conventional protocols for the above-mentioned mobile applications do not support a method for the client to trigger a dormant mode or inform the network that it is entering an idle mode. Because the network cannot determine when the data connection is idle, it uses a pre-configured timer to determine when to order the mobile station to a dormant state. This results in ineffective usage of radio resources and a compromised user experience.

In accordance with this disclosure, a new traffic class "Idle Connection" is introduced as a Quality of Service (QoS) parameter. The Idle Connection class is used for notification of idleness in a data connection. Advanced notification of idleness allows a mobile station to move to a dormant state at an advantageous time, thus effectively minimizing use of the radio and power resources, which may be considered scarce in wireless handsets. The Idle Connection class may be associated with a connection in which the bursty data transfer happens in less than the requested maximum Service Data Unit (SDU) size and the frequency of such data transfer is greater than 1 minute. The new Idle Connection class may be defined in the Mobile Radio Interface L3 Specification.

Currently, there are four existing QoS classes (also called traffic classes) that are well-known in the art. The four QoS classes (with their common binary identifiers) are:
Conversational (001);
Streaming (010);
Interactive (011); and
Background (100).

The Conversational class is often used for voice communication, although it is sometimes associated with other communication such as instant messaging (IM). The Streaming class is used primarily for one-way traffic, such as streaming video or audio. The Interactive class is characterized by a request-response pattern, such as seen in web browsing. The Interactive class is sometimes used in voice conversations as well. The Background class is typically used for communication where the delivery time to the destination is unknown or unexpected. A primary example is email.

In addition to these four QoS classes, there are two special traffic classes: Subscribed Traffic (000) and Reserved (111).

In accordance with embodiments of the present disclosure, a new traffic class, Idle Connection (101), is defined. Use of the Idle Connection class will help to minimize use of radio resources, thus increasing the battery life of UMTS/LTE handsets.

FIGURE 1 illustrates an exemplary wireless network 100 according to one embodiment of the present disclosure. In the illustrated embodiment, wireless network 100 includes base station (BS) 101, base station (BS) 102, and base station (BS) 103. Base station 101 communicates with base station 102 and base station 103. Base station 101 also communicates with Internet protocol (IP) network 130, such as the Internet, a proprietary IP network, or other data network. Base station 102 communicates with Radio Network Controller (RNC) 104. In certain embodiments, RNC 104 may be a part of base station 102. In certain embodiments, base station 101 and base station 103 may also communicate with RNC 104. In other embodiments, base station 101 and base station 103 may include, or be in communication with, another radio network controller similar to RNC 104.

Base station 102, either in cooperation with RNC 104 or through RNC 104, provides wireless broadband access to network 130 to a first plurality of subscriber stations within coverage area 120 of base station 102. The first plurality of subscriber stations includes subscriber station (SS) 111, subscriber station (SS) 112, subscriber station (SS) 113, subscriber station (SS) 114, subscriber station (SS) 115 and subscriber station (SS) 116. Subscriber stations 111-116 may be any wireless communication device, such as, but not limited to, a mobile phone, mobile PDA and any mobile station (MS). In an exemplary embodiment, SS 111 may be located in a small business (SB), SS 112 may be located in an enterprise (E), SS 113 may be located in a WiFi hotspot (HS), SS 114 may be located in a residence, and SS 115 and SS 116 may be mobile devices.

Base station 103 provides wireless broadband access to network 130, via base station 101, to a second plurality of subscriber stations within coverage area 125 of base station 103. The second plurality of subscriber stations includes subscriber station 115 and subscriber station 116. In alternate embodiments, base stations 102 and 103 may be connected directly to the Internet by means of a wired broadband connection, such as an optical fiber, DSL, cable or T1/E1 line, rather than indirectly through base station 101.

In other embodiments, base station 101 may be in communication with either fewer or more base stations. Furthermore, while only six subscriber stations are shown in FIGURE 1, it is understood that wireless network 100 may provide wireless broadband access to more than six subscriber stations. It is noted that subscriber station 115 and subscriber station 116 are on the edge of both coverage area 120 and coverage area 125. Subscriber station 115 and subscriber station 116 each communicate with both base station 102 and base station 103 and may be said to be cell-edge devices interfering with each other. For example, the communications between BS 102 and SS 116 may be interfering with the communications between BS 103 and SS 115. Additionally, the communications between BS 103 and SS 115 may be interfering with the communications between BS 102 and SS 116.

Subscriber stations 111-116 may use the broadband access to network 130 to access voice, data, video, video teleconferencing, and/or other broadband services. In an exemplary embodiment, one or more of subscriber stations 111-116 may be associated with an access point (AP) of a WiFi WLAN. Subscriber station 116 may be any of a number of mobile devices, including a wireless-enabled laptop computer, personal data assistant, notebook, handheld device, or other wireless-enabled device. Subscriber station 114 may be, for example, a wireless-enabled personal computer, a laptop computer, a gateway, or another device.

Dotted lines show the approximate extents of coverage areas 120 and 125, which are shown as approximately circular for the purposes of illustration and explanation only. It should be clearly understood that the coverage areas associated with base stations, for example, coverage areas 120 and 125, may have other shapes, including irregular shapes, depending upon the configuration of the base stations and variations in the radio environment associated with natural and man-made obstructions.

Also, the coverage areas associated with base stations are not constant over time and may be dynamic (expanding or contracting or changing shape) based on changing transmission power levels of the base station and/or the subscriber stations, weather conditions, and other factors. In an embodiment, the radius of the coverage areas of the base stations, for example, coverage areas 120 and 125 of base stations 102 and 103, may extend in the range from less than 2 kilometers to about fifty kilometers from the base stations.

As is well known in the art, a base station, such as base station 101, 102, or 103, may employ directional antennas to support a plurality of sectors within the coverage area. In FIGURE 1, base stations 102 and 103 are depicted approximately in the center of coverage areas 120 and 125, respectively. In other embodiments, the use of directional antennas may locate the base station near the edge of the coverage area, for example, at the point of a cone-shaped or pear-shaped coverage area.

Although FIGURE 1 depicts one example of a wireless network 100, various changes may be made to FIGURE 1. For example, another type of data network, such as a wired network, may be substituted for wireless network 100. In a wired network, network terminals may replace BS's 101-103 and SS's 111-116. Wired connections may replace the wireless connections depicted in FIGURE 1.

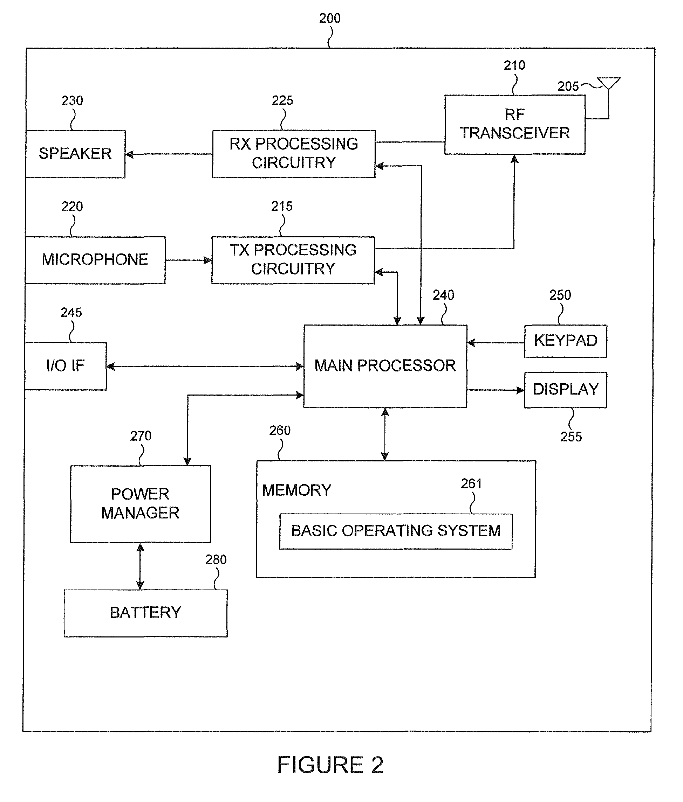

FIGURE 2 illustrates a wireless mobile station 200 according to embodiments of the present disclosure. In certain embodiments, wireless mobile station 200 may represent any of the subscriber stations 111-116 shown in FIGURE 1. The embodiment of wireless mobile station (MS) 200 illustrated in FIGURE 2 is for illustration only. Other embodiments of wireless mobile station 200 could be used without departing from the scope of this disclosure.

Wireless mobile station 200 comprises antenna 205, radio frequency (RF) transceiver 210, transmit (TX) processing circuitry 215, microphone 220, and receive (RX) processing circuitry 225. Mobile station 200 also comprises speaker 230, main processor 240, input/output (I/O) interface (IF) 245, keypad 250, display 255, memory 260, power manager 270, and battery 280.

Radio frequency (RF) transceiver 210 receives from antenna 205 an incoming RF signal transmitted by a base station of wireless network 100. Radio frequency (RF) transceiver 210 down-converts the incoming RF signal to produce an intermediate frequency (IF) or a baseband signal. The IF or baseband signal is sent to receiver (RX) processing circuitry 225 that produces a processed baseband signal by filtering, decoding, and/or digitizing the baseband or IF signal. Receiver (RX) processing circuitry 225 transmits the processed baseband signal to speaker 230 (i.e., voice data) or to main processor 240 for further processing (e.g., web browsing).

Transmitter (TX) processing circuitry 215 receives analog or digital voice data from microphone 220 or other outgoing baseband data (e.g., web data, e-mail, interactive video game data) from main processor 240. Transmitter (TX) processing circuitry 215 encodes, multiplexes, and/or digitizes the outgoing baseband data to produce a processed baseband or IF signal. Radio frequency (RF) transceiver 210 receives the outgoing processed baseband or IF signal from transmitter (TX) processing circuitry 215. Radio frequency (RF) transceiver 210 up-converts the baseband or IF signal to a radio frequency (RF) signal that is transmitted via antenna 205.

In some embodiments of the present disclosure, main processor 240 is a microprocessor or microcontroller. Memory 260 is coupled to main processor 240. Memory 260 can be any computer readable medium. For example, memory 260 can be any electronic, magnetic, electromagnetic, optical, electro-optical, electro-mechanical, and/or other physical device that can contain, store, communicate, propagate, or transmit a computer program, software, firmware, or data for use by the microprocessor or other computer-related system or method. According to such embodiments, part of memory 260 comprises a random access memory (RAM) and another part of memory 260 comprises a Flash memory, which acts as a read-only memory (ROM).

Main processor 240 executes basic operating system (OS) program 261 stored in memory 260 in order to control the overall operation of mobile station 200. In one such operation, main processor 240 controls the reception of forward channel signals and the transmission of reverse channel signals by radio frequency (RF) transceiver 210, receiver (RX) processing circuitry 225, and transmitter (TX) processing circuitry 215, in accordance with well-known principles.

Main processor 240 is capable of executing other processes and programs resident in memory 260. Main processor 240 can move data into or out of memory 260, as required by an executing process. Main processor 240 is also coupled to power manager 270, which is further coupled to battery 280. Main processor 240 and/or 270 power manager may include software, hardware, and/or firmware capable of controlling and reducing power usage and extending the time between charges of battery 280. In certain embodiments, power manager 270 may be separate from main processor 240. In other embodiments, power manager 270 may be integrated in, or otherwise a part of, main processor 240.

Main processor 240 is also coupled to keypad 250 and display unit 255. The operator of mobile station 200 uses keypad 250 to enter data into mobile station 200. Display 255 may be a liquid crystal or light emitting diode (LED) display capable of rendering text and/or graphics from web sites. Alternate embodiments may use other types of displays.

Although FIGURE 2 depicts one example of a mobile station 200, various changes may be made to FIGURE 1. For example, a wired or wireless network terminal may be substituted for mobile device 200. A wired network terminal may or may not include components for wireless communication, such as antenna 205.

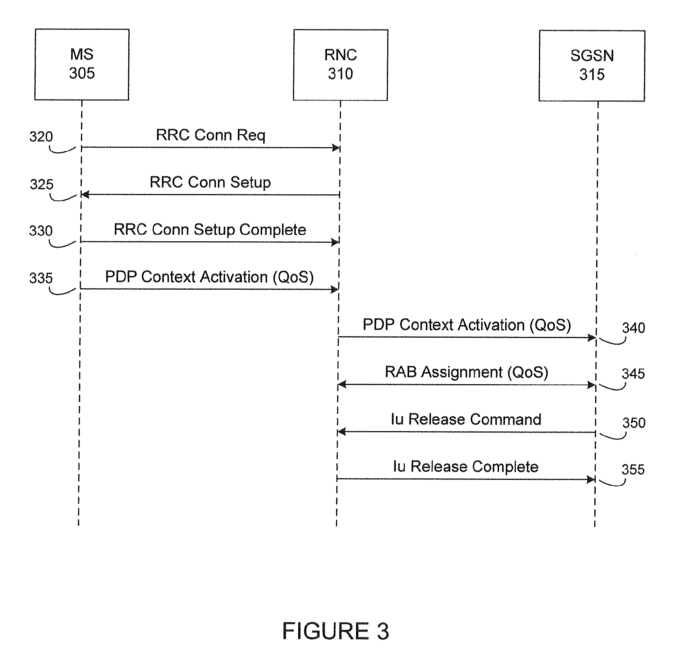

FIGURE 3 illustrates a conventional PDP Context Activation process in a UMTS network. The process is performed by a mobile station (MS) 305, a Radio Network Controller (RNC) 310, and a Serving GPRS Support Node (SGSN) 315. The process starts by MS 305 initiating a RRC Connection Request to RNC 310 (step 320). RNC 310 accepts the request and completes the setup (step 325). MS 305 responds to the setup by sending a RRC Connection Setup Complete message to RNC 310 (step 330).

Next, MS 305 requests a PDP Context Activation procedure by sending a message to RNC 310 (step 335). The PDP Context Activation message is associated with one of the four conventional QoS classes (i.e., Conversational, Streaming, Interactive, and Background). The PDP Context Activation message is forwarded from RNC 310 to SGSN 315 (step 340). RNC 310 and SGSN 315 negotiate the (Radio Access Bearer) RAB Assignment to allocate Radio Access Bearers (step 345). Next, SGSN 315 initiates an Iu Release command to RNC 310 (step 350). Upon completion, RNC 310 sends an Iu Release Complete message back to SGSN 315 (step 355).

Because RNC 310 cannot determine when the data connection is idle, it uses a pre-configured timer to determine when to order MS 305 to a dormant state. This results in ineffective usage of radio resources and a compromised user experience. Instead of using a pre-configured timer to determine when to order the mobile station to a dormant state, a network in accordance with the present disclosure may advantageously use the new Idle Connection traffic class. The Idle Connection traffic class serves as a trigger to tear down the data connection at the appropriate time. Thus, inefficient use of a mobile station's resources can be reduced to a minimum.

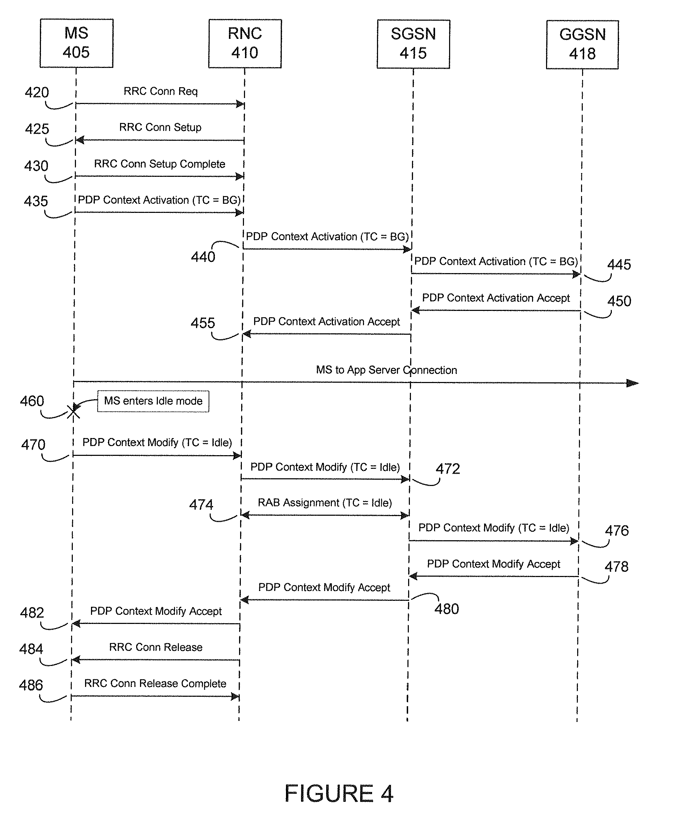

FIGURE 4 illustrates a PDP Context Modification process in a UMTS or LTE network using an Idle Connection traffic class, according to embodiments of the present disclosure. The process is performed by a mobile station (MS) 405, a Radio Network Controller (RNC) 410, a Serving GPRS Support Node (SGSN) 415, and a Gateway GPRS Support Node (GGSN) 418. In certain embodiments, MS 405 may represent wireless mobile station 200 shown in FIGURE 2. Likewise, RNC 410, SGSN 415, and GGSN 418 may represent any one or more of BS's 101-103 and RNC 104 in FIGURE 1.

The process starts with a PDP Context Activation. First, an application executed by MS 405 (e.g., an email application) initiates a RRC Connection Request to RNC 410 (step 420). RNC 410 accepts the Connection Request and completes the setup (step 425). MS 405 responds to the setup by sending a RRC Connection Setup Complete message to RNC 410 (step 430). At this point, the RRC connection is in a CELL_DCH state.

Next, MS 405 requests a PDP Context Activation procedure by sending a message to RNC 410 (step 435). The PDP Context Activation message has a traffic class equal to Background. In certain embodiments, the Idle Connection class will follow the Background class for delivery. RNC 410 forwards the PDP Context Activation message to SGSN 415 (step 440), and SGSN 415 forwards the PDP Context Activation message to GGSN 418 (step 445). Upon acceptance, GGSN 418 sends a PDP Context Activation Acceptance message to SGSN 415 (step 450). The message is then forwarded to RNC 410 (step 455).

At this point, the data connection is established, and data can be communicated between MS 405 and the application server on the network. Later, MS 405 enters an idle mode (indicated generally at 460). In certain embodiments, MS 405 may enter the idle mode after a pre-determined timeout period. In other embodiments, MS 405 may enter the idle mode based on a determination of inactivity in the data connection. In still other embodiments, other factors may trigger the idle mode of MS 405.

After entering the idle mode, MS 405 sends out a PDP Context Modification request to RNC 410 (step 470). The PDP Context Modification request has a traffic class equal to "Idle Connection". RNC 410 forwards the PDP Context Modification request to SGSN 415 (step 472). Next, the RAB Assignment procedure is initiated between RNC 410 and SGSN 415 (step 474). In this case, the Radio Access Bearers will be released. Also, SGSN 415 forwards the PDP Context Modification request to GGSN 418 (step 476).

Upon acceptance of the PDP Context Modification request, GGSN 418 sends a PDP Context Modification Acceptance message to SGSN 415 (step 478). The message is forwarded first to RNC 410 (step 480), and then to MS 405 (step 482). At this point, RNC 410 recognizes the Idle Connection traffic class and initiates a RRC Connection Release (step 484). The RRC Connection Release orders MS 405 into a dormant state. Upon release of the connection, MS 405 sends a RRC Connection Release Complete message to RNC 410 (step 486). This leaves MS 405 in a dormant state.

Thus, in accordance with the process described in FIGURE 4, if an Idle Connection traffic class is assigned, the GGSN and/or SGSN informs the RNC to immediately release the RRC Connection. This method moves the MS into a dormant state immediately, thereby saving radio resources. To wake up, MS 405 may follow existing wakeup procedures.

Although FIGURE 4 illustrates one example of a PDP Context Modification process in a UMTS or LTE network using an Idle Connection traffic class, various changes may be made to FIGURE 4. For example, while shown as a series of steps, various steps in FIGURE 4 may overlap, occur in parallel, occur in a different order, or occur multiple times. Also, while shown as being performed by wireless network elements, the process of FIGURE 4 may also be a QoS modification process performed by network terminals in other types of data networks, such as a wired IP network.

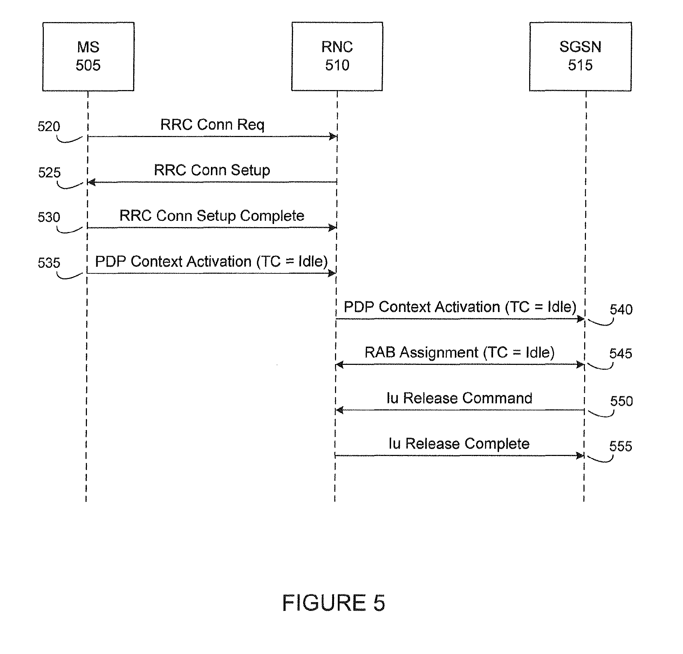

FIGURE 5 illustrates a PDP Context Activation process in a UMTS or LTE network using an Idle Connection traffic class, according to embodiments of the present disclosure. Use of the Idle Connection traffic class with a PDP Context Activation may be beneficial in preserving resources in short-duration communication such as IM. The process is performed by a mobile station (MS) 505, a Radio Network Controller (RNC) 510, and a Serving GPRS Support Node (SGSN) 515. In certain embodiments, MS 505 may represent wireless mobile station 200 shown in FIGURE 2. Likewise, RNC 510 and SGSN 515 may represent any one or more of BS's 101-103 and RNC 104 in FIGURE 1.

The process starts by MS 505 initiating a RRC Connection Request to RNC 510 (step 520). RNC 510 accepts the request and completes the setup (step 525). MS 505 responds to the setup by sending a RRC Connection Setup Complete message to RNC 510 (step 530). At this point, the RRC connection is in a CELL_DCH state.

Next, MS 505 requests a PDP Context Activation procedure by sending a message to RNC 510 (step 535). The PDP Context Activation message has a QoS traffic class equal to "Idle Connection". The PDP Context Activation message is forwarded from RNC 510 to SGSN 515 (step 540). RNC 510 and SGSN 515 negotiate the RAB Assignment to allocate Radio Access Bearers (step 545).

Because the traffic class is "Idle Connection", SGSN 515 knows to release the data connection after a pre-determined delay period, e.g., five seconds. The five-second delay allows the application running on MS 505 to perform registration steps and/or other communication with the application server. Accordingly, after approximately five seconds, SGSN 515 initiates an Iu Release command to RNC 510 (step 550). In certain embodiments, the delay may be longer or shorter than five seconds. Upon completion, RNC 510 sends an Iu Release Complete message back to SGSN 515 (step 555).

Although FIGURE 5 illustrates one example of a PDP Context Activation process in a UMTS or LTE network using an Idle Connection traffic class, various changes may be made to FIGURE 5. For example, while shown as a series of steps, various steps in FIGURE 5 may overlap, occur in parallel, occur in a different order, or occur multiple times. Also, while shown as being performed by wireless network elements, the process of FIGURE 5 may also be a QoS request process performed by network terminals in other types of data networks, such as a wired IP network.

Although the present disclosure has been described with an exemplary embodiment, various changes and modifications may be suggested to one skilled in the art. It is intended that the present disclosure encompass such changes and modifications as fall within the scope of the appended claims.

## Claims

1. For use in a wireless network, a mobile station comprising:
a memory; and
a controller operatively coupled to the memory, the controller configured to:
send a PDP context message to a network controller, the PDP context message having a traffic class associated with an idle connection;
receive a connection release message from the network controller; and
based on the connection release message, move the mobile station to a dormant state.

2. The mobile station of Claim 1, wherein the connection release message is sent from the network controller as a result of receiving the PDP context message.

3. The mobile station of Claim 1, the controller further configured to:
establish a data connection between the mobile station and the network controller; and
determine that the mobile station is in an idle mode while the data connection is established.

4. The mobile station of Claim 1, wherein the PDP context message is a PDP context activation message or PDP context modification message.

5. The mobile station of Claim 1, wherein the connection release message is one of a Iu Release message and a RRC Connection Release message.

6. The mobile station of Claim 1, wherein the traffic class is "Idle Connection".

7. The mobile station of Claim 1, wherein a binary identifier associated with the "Idle Connection" traffic class is 101.

8. A wireless communication network, the network comprising:
a plurality of mobile stations; and
at least one radio network controller (RNC) in communication with at least one of the mobile stations, the RNC configured to:
receive a PDP context message from a first one of the mobile stations, the PDP context message having a traffic class associated with an idle connection; and
in response to receiving the PDP context message, send a connection release message to the first mobile station, the connection release message directing the first mobile station to move to a dormant state.

9. The wireless communication network of Claim 8, wherein the PDP context message is one of a PDP context activation message and a PDP context modification message, and the connection release message is one of a Iu Release message and a RRC Connection Release message.

10. The wireless communication network of Claim 8, wherein the traffic class is "Idle Co nnection".

11. For use in a wireless communication network, a method comprising the steps of:
receiving a PDP context message from a mobile station, the PDP context message having a traffic class associated with an idle connection; and
in response to receiving the PDP context message, sending a connection release message to the mobile station, the connection release message directing the mobile station to move to a dormant state.

12. The method of Claim 11, wherein the PDP context message is one of a PDP context a ctivation message and a PDP context modification message.

13. The method of Claim 11, wherein the connection release message is one of a Iu Release message and a RRC Connection Release message.

14. The method of Claim 11, wherein the traffic class is "Idle Connection".

15. For use in a network, a network terminal comprising:
a memory; and
a controller operatively coupled to the memory, the controller configured to:
send a QoS control message to a network controller, the QoS control message having a traffic class associated with an idle connection;
receive a connection release message from the network controller; and
based on the connection release message, move the network terminal to a idle state.

16. The network terminal of Claim 15, wherein the connection release message is sent from the network controller as a result of receiving the QoS control message.

17. The network terminal of Claim 15, the controller further configured to:
establish a data connection between the network terminal and the network controller; and
determine that the network terminal is in an idle mode while the data connection i s established.

18. The network terminal of Claim 15, wherein the QoS control message is one of a QoS request message and a QoS modification message.

19. The network terminal of Claim 15, wherein the traffic class is "Idle Connection".
